# FASCICULE DE BREVET EUROPEEN

(11) **EP 1 096 686 B1**
(45) Date de publication et mention de la délivrance du brevet: **28.04.2004**
(21) Numéro de dépôt: 00402964.1
(22) Date de dépôt: 25.10.2000
(51) Int. Cl.: H03L 7/091, H03K 5/153, G11B 7/007, G01R 29/02, G11B 20/10, G11B 7/00, H04L 7/033

(54) **Dispositif électronique de calcul de l'intervalle temporel entre des transitions successives d'un signal incident**
Elektronische Vorrichtung zur Berechnung des Zeitschlitzes zwischen aufeinanderfolgenden Übergängen von einem Fehler-Signal
Electronic device for calculation of a time slot between successive transitions of a failure signal

(30) Priorité: 28.10.1999 FR 9913523
(43) Date de publication de la demande: 02.05.2001
(73) Titulaire: STMicroelectronics S.A., 92120 Montrouge (FR)
(72) Inventeur: Lebowsky, Fritz, 38410 Corps D'Uriage (FR); Marrec, Sonia, 38240 Meylan (FR)
(74) Mandataire: Dossmann, Gérard

(56) Documents cités:
- EP-A- 1 037 204
- US-A- 4 497 048
- US-A- 4 583 209
- PATENT ABSTRACTS OF JAPAN vol. 018, no. 473 (P-1795), 2 septembre 1994 (1994-09-02) & JP 06 150354 A (SANKYO SEIKI MFG CO LTD), 31 mai 1994 (1994-05-31)

## Description

L'invention concerne le calcul de l'intervalle temporel entre des transitions successives, par rapport à un seuil, d'un signal incident échantillonné.

L'invention s'applique avantageusement mais non limitative ment au domaine des disques numériques, notamment ceux connus sous le vocable de "disque compact" (CD-ROM : Read Only Compact disc en langue anglaise) et tout particulièrement les disques numériques multifonctions (DVD : "Digital Versatil disc" en langue anglaise) stockant de façon comprimée des données d'image.

L'invention permet ainsi en particulier de détecter un déphasage éventuel entre deux signaux élémentaires issus de photodétecteurs, déphasage qui correspond à l'erreur de positionnement du faisceau optique incident, par exemple un spot laser, illuminant la piste du disque. Cette erreur de positionnement est alors utilisée classiquement dans une boucle d'asservissement pour modifier le système optique incident et ramener et asservir le faisceau optique sur la piste.

D'une façon plus générale, la détermination de l'intervalle temporel entre deux transitions successives d'un signal incident échantillonné nécessite classiquement l'utilisation de plusieurs mémoires du type "premier entré - premier sorti" (First In - First Out : FIFO en langue anglaise) pour stocker successivement un certain nombre d'échantillons du signal reçu, ainsi qu'un système de gestion relativement complexe permettant de repérer les instants temporels d'apparition des transitions.

L'invention vise à proposer une solution matérielle extrêmement simple pour calculer l'intervalle temporel entre deux transitions successives sélectionnées d'un signal incident échantillonné, par rapport à un seuil.

L'invention propose donc un dispositif électronique de calcul de l'intervalle temporel entre deux transitions successives sélectionnées d'un signal incident échantillonné, par rapport à un seuil.

Selon une caractéristique générale de l'invention, le dispositif comprend tout d'abord des moyens de détection et de sélection aptes à détecter et à sélectionner des transitions du signal incident.

En toute généralité, le dispositif selon l'invention permet de calculer très simplement l'intervalle temporel entre deux transitions successives quel que soit le sens de ces transitions, c'est-à-dire si le signal franchit le seuil dans un sens ou dans l'autre. Ceci étant, les moyens de sélection peuvent sélectionner uniquement des transitions montantes ou descendantes du signal incident de façon à déterminer l'intervalle temporel entre deux transitions de même sens.

Le dispositif selon l'invention comporte par ailleurs des moyens de calcul aptes à calculer l'écart temporel ou phase entre chaque transition sélectionnée et un front du signal d'horloge d'échantillonnage. Le dispositif comporte par ailleurs au moins une chaîne d'au moins trois blocs, chaque bloc comportant une cellule de mémorisation et un compteur temporel cadencé par le signal d'horloge d'échantillonnage. Il est également prévu des moyens de contrôle aptes, en réponse à chaque transition courante sélectionnée, à déclencher un traitement d'activation de la chaîne comportant une initialisation du compteur du premier bloc de la chaîne, un stockage dans la cellule du premier bloc de la valeur de l'écart temporel (ou phase) correspondant à la transition courante sélectionnée, puis un transfert du contenu d'un bloc de la chaîne dans le bloc suivant. Des moyens de traitement sont alors aptes à déterminer l'intervalle temporel entre deux transitions sélectionnées successives à partir des valeurs des compteurs temporels des deuxième et troisième blocs et des valeurs des écarts temporels (ou phases) respectivement stockés dans les cellules des deuxième et troisième blocs.

Dans une application de détermination du déphasage mutuel entre deux signaux élémentaires, le dispositif comporte avantageusement deux chaînes d'au moins trois blocs, respectivement dédiées à des transitions de sens opposés, ainsi qu'un moyen de multiplexage commandé en fonction du signe de chaque transition détectée. Les transitions successives ayant le même sens, qu'elles proviennent de l'un ou l'autre des deux signaux élémentaires, seront traitées dans l'une des chaînes de trois blocs, tandis que les transitions successives ayant l'autre sens, qu'elles proviennent de l'un ou l'autre des deux signaux élémentaires, seront traitées dans la deuxième chaîne.

L'invention a également pour objet un lecteur de disque numérique, en particulier un disque DVD, incorporant un tel dispositif.

D'autres avantages et caractéristiques de l'invention apparaîtront à l'examen de la description détaillée de modes de réalisation, nullement limitatifs, et des dessins annexés, sur lesquels :
- la figure 1 illustre très schématiquement un premier mode de réalisation d'un dispositif selon l'invention, permettant notamment la détermination de l'intervalle temporel entre des transitions successives d'un signal incident échantillonné tel que celui illustré sur la figure 2; et
- la figure 3 illustre toujours très schématiquement, un autre mode de réalisation du dispositif selon l'invention, permettant notamment la détermination du déphasage mutuel entre deux signaux élémentaires échantillonnés tels que ceux illustrés sur la figure 4.

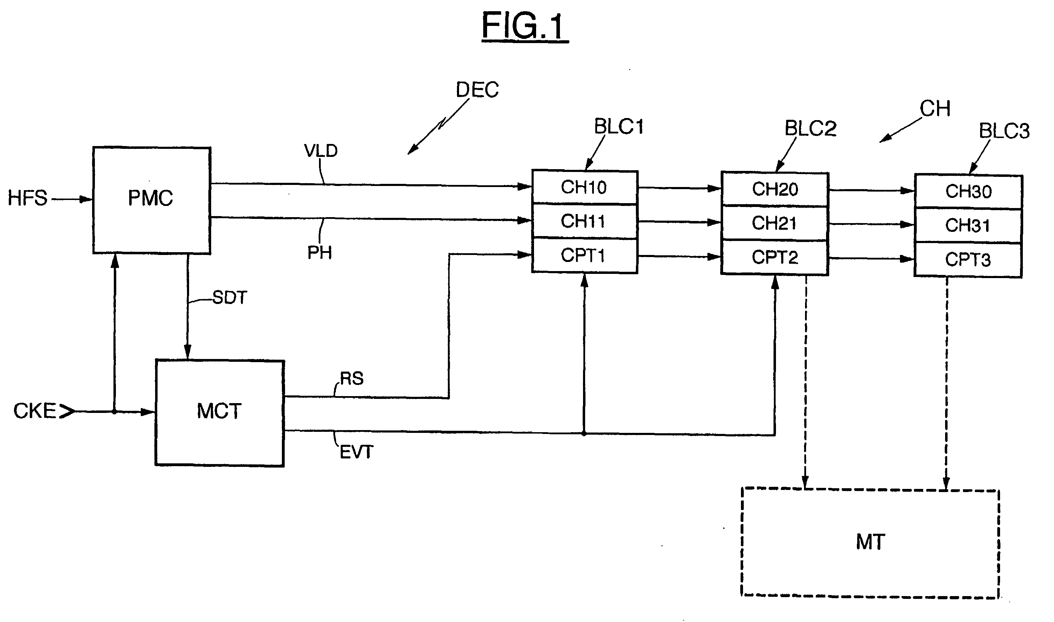

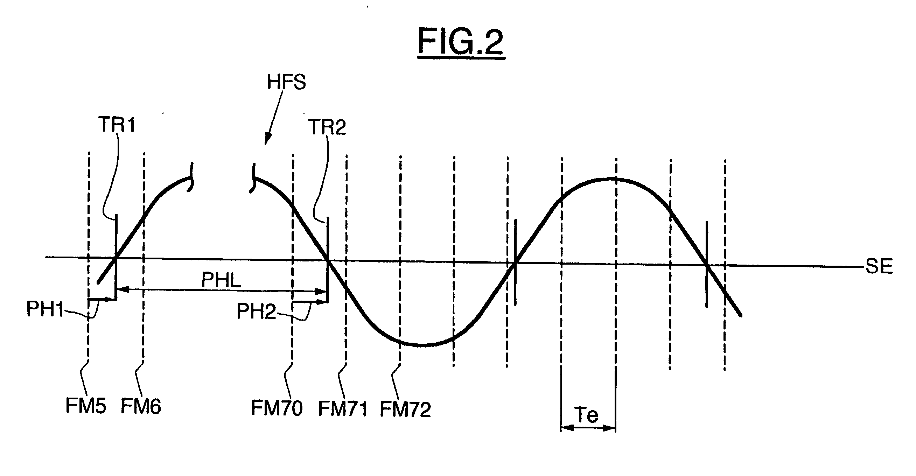

Le mode de réalisation du dispositif illustré sur la figure 1 permet, d'une façon très générale, de déterminer l'intervalle temporel PHL entre deux transitions successives d'un signal incident HFS, tel que celui illustré sur la figure 2, et ce, quel que soit le sens de cette transition par rapport au seuil SE, c'est-à-dire s'il s'agit d'un franchissement du seuil SE dans le sens montant (transition TR1) ou dans le sens descendant (transition TR2). La valeur du seuil SE peut être quelconque, par exemple égale à 0.

Le dispositif selon l'invention DEC (figure 1) possède une entrée pour recevoir le signal incident HFS. Ce signal incident est échantillonné par un signal d'horloge d'échantillonnage CKE ayant une fréquence d'échantillonnage Fe et une période d'échantillonnage Te.

Sur la figure 2, les traits verticaux en tiretés représentent des fronts montants du signal d'horloge d'échantillonnage CKE.

Le dispositif DEC comporte un étage d'entrée PMC comportant une boucle numérique à verrouillage de phase, de structure connue en soi. Ces moyens PMC reçoivent également le signal d'horloge d'échantillonnage CKE et élaborent un signal d'échantillonnage auxiliaire dont la période T_{pmc} est égale à Te/n, n étant un entier. Ces moyens PMC détectent toute transition TR du signal HFS par rapport au seuil SE et déterminent dans quel intervalle du signal d'échantillonnage auxiliaire se situe ladite transition. Plus précisément, les moyens PMC délivrent en sortie un mot numérique représentatif de la distance PH (phase) entre toute transition détectée du signal HFS et le front montant du signal d'horloge CKE immédiatement précédent.

En pratique, à titre d'exemple, si la boucle à verrouillage de phase comporte typiquement 32 inverseurs permettant de subdiviser la période Te du signal d'horloge d'échantillonnage en 32 intervalles (n = 32), les moyens PMC vont délivrer un mot de 5 bits représentant le numéro de l'intervalle dans lequel se situe la transition, c'est-à-dire en fait l'écart temporel entre le front montant du signal d'horloge d'échantillonnage et la transition du signal. Ainsi, un mot numérique égal à 00000 sera représentatif d'une transition en phase avec le front montant du signal d'horloge, tandis qu'un mot numérique égal à 11111 sera représentatif d'une transition se situant juste avant le front montant suivant du signal d'horloge.

L'étage d'entrée PMC délivre la valeur de chaque phase PH détectée ainsi qu'un signal logique de validation VLD ayant par exemple la valeur 1 lorsque la phase a été effectivement calculée avant l'arrivée de l'échantillon suivant du signal HFS, et ayant la valeur logique 0 pour signifier que la valeur de phase calculée est en fait invalide. L'étage d'entrée délivre par ailleurs un signal logique SDT indicatif de la détection d'une transition du signal HFS. Les différents signaux logiques sont classiquement produits à partir de registres et/ou d'éléments logiques tels que des portes, aisément réalisables par l'homme du métier.

Des moyens de contrôle MCT, pouvant par exemple être réalisés sous forme de circuit logique par des outils de synthèse logique ou encore de façon logicielle au sein d'un microprocesseur, reçoivent le signal SDT indicatif de la détection d'une transition du signal HFS.

L'une des fonctions des moyens de contrôle MCT est de déclencher un traitement d'activation d'une chaîne CH formée de trois blocs BLC1, BLC2 et BLC3.

Plus précisément, chaque bloc comporte une cellule de mémorisation (mémoire ou partie de mémoire ou bascules D) comportant deux champs (CH10 et CH11 pour le bloc BLC1, CH20 et CH21 pour le bloc BLC2, et CH30 et CH31 pour le bloc BLC3). Les deux champs de chaque cellule de mémorisation sont respectivement destinés à stocker les valeurs du signal VLD et de la phase PH, comme on le verra plus en détail ci-après.

Par ailleurs, chaque bloc comporte un compteur temporel (CPT1 pour le bloc BLC1, CPT2 pour le bloc BLC2, et CPT3 pour le bloc BLC3). Chacun de ces compteurs temporels est cadencé au rythme du signal d'horloge d'échantillonnage CKE, c'est-à-dire qu'il est incrémenté d'une unité à chaque front montant du signal d'horloge CKE.

Par ailleurs, les moyens de contrôle MCT sont aptes à délivrer au compteur CPT1 du premier bloc BLC1 un signal de réinitialisation RS. Les moyens MCT sont également aptes à délivrer à chacun des deux premiers blocs un signal de transfert EVT en réponse auquel, comme on va le voir plus en détail ci-après, il y a transfert du contenu du bloc BLC1 dans le bloc BLC2.

On va maintenant décrire plus en détail le fonctionnement du dispositif selon l'invention en supposant, comme illustré sur la figure 2, qu'une première transition TR1 du signal HFS a été détectée (détection d'un changement de signe) entre le front d'horloge FM5 et le front d'horloge FM6 et qu'une deuxième transition a été détectée entre les fronts d'horloge FM70 et FM71. A des fins de simplification des notations, on désignera respectivement par PH1 et PH2 les écarts temporels (phases) entre la transition TR1 et le front montant FM5 d'une part, et entre la transition TR2 et le front montant FM70 d'autre part.

Lors de l'occurrence (apparition) du front d'horloge FM6, l'étage PMC a détecté la transition TR1 (changement de signe) et détermine, entre l'occurrence du front montant FM6 et l'occurrence du front montant FM7 (non représenté sur la figure 2 à des fins de simplification) la valeur de la phase PH1 par rapport au front montant FM5. Dans l'hypothèse où cette phase PH1 a été effectivement calculée avant l'occurrence du front montant FM7, le signal logique VLD prend la valeur 1.

La phase PH1 et le signal logique VLD sont respectivement stockés dans les mémoires CH11 et CH10 de la cellule de mémorisation du bloc BLC1. Par ailleurs, en présence du signal SDT représentatif de la détection de la transition TR1, les moyens MCT délivrent au compteur CPT1 le signal de réinitialisation RS, c'est-à-dire qu'ils réinitialisent ce compteur à une valeur initiale, par exemple la valeur 0.

Lorsque le front montant FM7 arrive, les moyens MCT activent le signal logique EVT, ce qui a pour conséquence de transférer le contenu du bloc BLC1 dans le bloc BLC2 et de transférer le contenu du bloc BLC2 dans le bloc BLC3.

Dans le cas présent, la valeur du signal logique VLD est transférée dans la mémoire CH20 du bloc BLC2. La phase PH1 est transférée dans la mémoire CH21 du bloc BLC2 et le compteur CPT2 prend donc la valeur 0 qui était celle du compteur CPT1.

Au rythme des fronts montants suivants du signal d'horloge CKE, les compteurs CPT1, CPT2 et CPT3 vont s'incrémenter, le compteur CPT2 restant toutefois toujours décalé de une unité en moins par rapport au compteur CPT1.

Ainsi, lors de l'occurrence du front montant FM70, le compteur CPT1 a la valeur 64, tandis que le compteur CPT2 a la valeur 63. A l'apparition du front montant FM71, la deuxième transition TR2 est détectée, ce qui provoque la montée à "1" du signal de détection de transition SDT ainsi que le calcul de la phase PH2 par rapport au front montant FM70. Toujours dans l'hypothèse où cette phase est calculée avant l'occurrence du front montant FM72, le signal VLD associé à cette phase prend la valeur 1. Le signal VLD et la phase PH2 sont donc respectivement stockés dans les mémoires CH 10 et CH11 du premier bloc BLC1 et le compteur CPT1 est réinitialisé à 0, tandis que le compteur CPT2 a pris la valeur 64.

Lors du front montant FM72, il y a activation du signal logique EVT, ce qui provoque le transfert du contenu du bloc BLC1 dans le bloc BLC2 et le transfert du bloc BLC2 dans le bloc BLC3.

Par conséquent, la mémoire CH31 contient la phase PH1 et la mémoire CH21 contient la phase PH2. Par ailleurs, le compteur CPT2 a alors la valeur 0 et le compteur CPT3 la valeur 64. Le compteur CPT1 a quant à lui été incrémenté d'une unité et a donc la valeur 1.

Au rythme des fronts montants suivants, les compteurs CPT1, CPT2 et CPT3 vont successivement s'incrémenter, mais la différence entre les compteurs CPT3 et CPT2 restera toujours égale à 64, ce qui correspond aux 64 périodes Te s'étendant entre le front FM6 et le front FM70.

Ainsi, des moyens de traitement MT (par exemple également réalisables de façon logicielle au sein d'un microcontrôleur) peuvent à tout instant précédant l'apparition d'une nouvelle transition, calculer l'intervalle temporel PHL entre les transitions TR1 et TR2, à partir des valeurs des compteurs temporels CPT2 et CPT3 et des valeurs PH1 et PH2 stockées dans les blocs BLC2 et BLC3. Plus précisément, dans le cas présent, l'intervalle temporel PHL sera égal à (64Te + PH2 + Te - PH1).

Dans le cas très général qui vient d'être décrit, on a sélectionné toutes les transitions quel que soit leur sens. Bien entendu, on pourrait effectuer dans l'étage PMC, une sélection plus stricte des transitions et ne calculer par exemple que les intervalles temporels entre des transitions de même sens. Dans ce cas, le critère de sélection serait le sens des transitions déterminé par le changement de signe (+, -) ou (-,+) de chaque échantillon par rapport au seuil SE.

Bien entendu, la figure 1 n'illustre que très schématiquement l'architecture matérielle de ce mode de réalisation. Des variantes sont possibles, comme par exemple l'adjonction de bascules D, commandées par le signal d'horloge CKE, et disposées entre les moyens PMC et la chaîne de bloc, de façon à "pipeliner" le traitement.

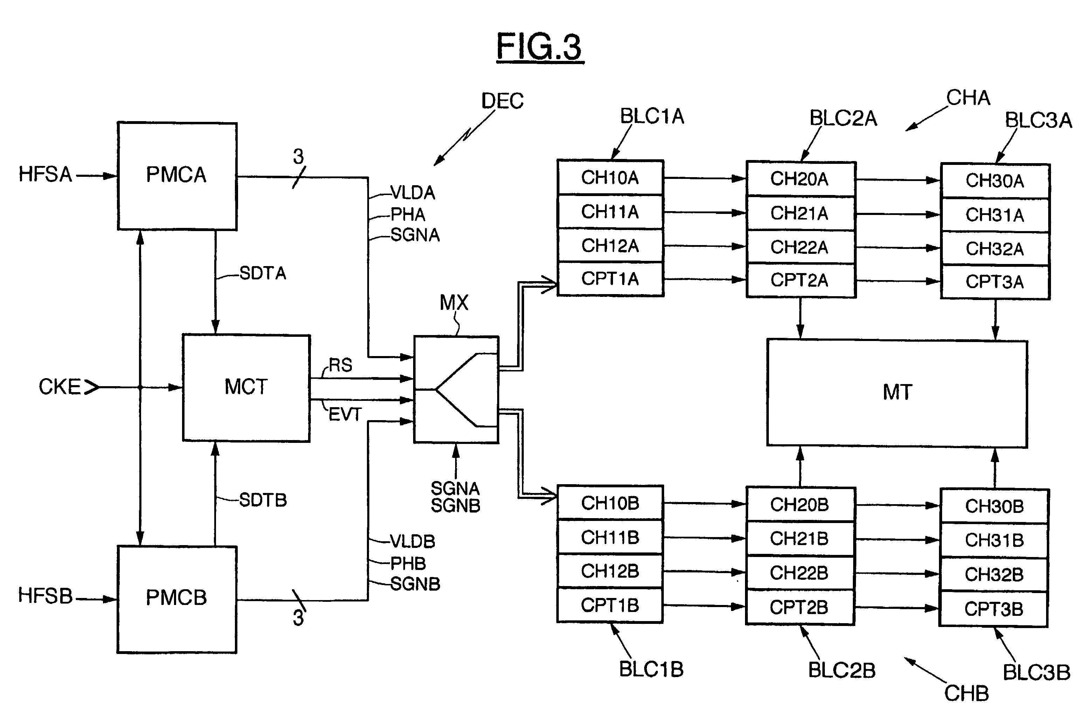

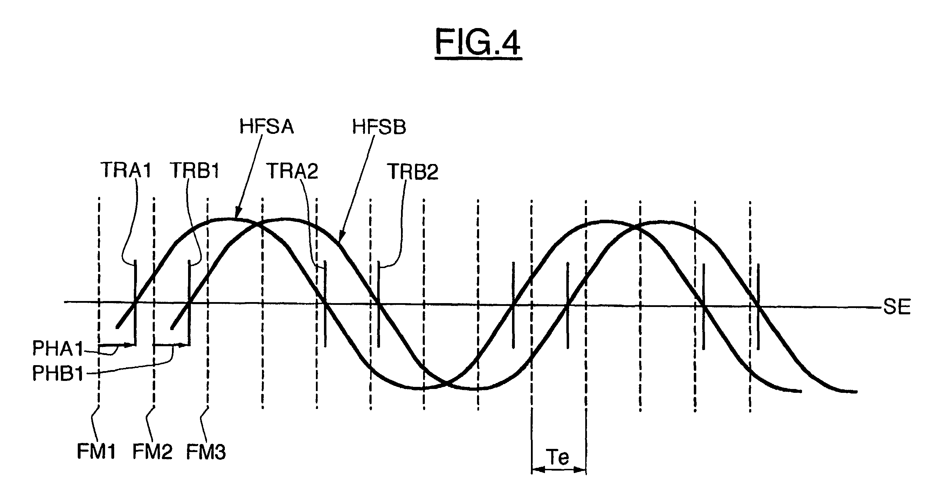

La variante de réalisation illustrée sur la figure 3 est un mode de réalisation du dispositif selon l'invention, plus particulièrement adapté à la détermination du déphasage mutuel entre deux signaux élémentaires HFSA et HFSB (figure 4) formant ensemble le signal incident.

Une application particulièrement intéressante concerne les lecteurs de disques, tels que les lecteurs de disques compacts ou DVD.

Un disque numérique comporte une seule piste en spirale dont le relief est représentatif des informations binaires stockées sur la piste du disque. On éclaire par un faisceau optique incident, par exemple un spot laser, la piste du disque et plusieurs photodétecteurs, par exemple quatre, détectent la réflexion du faisceau lumineux sur le disque.

Le capteur optique, formé des photodétecteurs, délivre alors quatre signaux de base respectivement délivrés par les quatre photodétecteurs, ainsi qu'un signal global, ou signal utile, égal à la somme des quatre signaux de base, signal utile d'où l'on extrait les informations binaires lues sur la piste. L'asservissement du faisceau optique sur la piste du disque mobile en rotation s'effectue à partir des quatre signaux de base délivrés par les photodétecteurs. Classiquement, on somme les signaux de base par paire de façon à former deux signaux élémentaires que l'on échantillonne. Les deux signaux élémentaires sont mutuellement déphasés si le spot laser ne se situe pas sur la piste. On détecte alors la différence de phase entre ces deux signaux, différence de phase qui correspond à l'erreur de positionnement du faisceau par rapport à la piste. Cette erreur de positionnement est alors utilisée classiquement dans une boucle d'asservissement pour modifier le système optique incident et ramener et asservir le faisceau optique sur la piste.

Dans l'exemple illustré sur les figures 3 et 4, les deux signaux élémentaires échantillonnés dont on veut déterminer le déphasage mutuel, sont référencés HFSA et HFSB. Seules les différences entre l'architecture des figures 1 et 3 seront décrites à des fins de simplifications.

Comme illustré sur la figure 3, les moyens de détection et de sélection des transitions comportent deux moyens élémentaires de détection et de sélection PMCA et PMCB, qui comportent chacun une boucle numérique à verrouillage de phase telle que celle qui a été décrite ci-avant.

Par rapport à la solution très générale et illustrée sur la figure 1, chaque moyen PMCA (PMCB) délivre, pour chaque transition détectée du signal élémentaire correspondant, l'écart temporel ou phase PHA (PHB) de la transition par rapport au front montant précédent du signal d'horloge CKE, l'information de validité VLDA (VLDB), mais également le signe SGNA (SGNB) de la transition.

Par ailleurs, par rapport au schéma de la figure 1, le dispositif de la figure 3 comporte deux chaînes CHA et CHB d'au moins trois blocs BLC1, BLC2, BLC3, ces deux chaînes étant respectivement dédiées à des transitions de sens opposés. Ainsi, la chaîne CHA va par exemple traiter les transitions montantes de chaque signal élémentaire, tandis que la chaîne CHB va traiter les transitions descendantes.

Un moyen de multiplexage MX est connecté entre les moyens de contrôle MCT, les moyens élémentaires de détection, de sélection et de calcul PMCA et PMCB, et les deux chaînes CHA et CHB. Ce multiplexeur est commandé par un signal logique représentatif du signe SGNA, SGNB de chaque transition détectée.

Et, les moyens de contrôle MCT activent sélectivement l'une des deux chaînes de blocs en fonction du sens de chaque transition détectée.

Matériellement, chaque bloc de l'une quelconque des chaînes est identique à l'un des blocs décrits dans la chaîne CH de la figure 1, à la différence près que l'on peut prévoir qu'il comprenne un champ-mémoire supplémentaire CH12 (CH22, CH32) pour stocker le signe de la transition détectée, éventuellement à des fins de contrôle ultérieur par les moyens de traitement MT.

Les signaux de commande de réinitialisation des compteurs RS et de transfert EVT sont également transmis aux chaînes CHA et CHB via le multiplexeur MX.

Le traitement d'activation de chacune des chaînes CHA et CHB est identique à celui qui a été décrit en référence à la figure 1.

Ainsi, à titre indicatif, toutes les transitions successives montantes des signaux élémentaires HFSA et HFSB comme par exemple les transitions TRA1 et TRB1 (figure 4), seront traitées dans la chaîne CHA, tandis que toutes les transitions descendantes successives comme par exemple les transitions TRA2 et TRB2, seront traitées dans la chaîne CHB.

Ainsi, les moyens de traitement MT sont aptes à déterminer l'intervalle temporel entre deux transitions successives sélectionnées d'un sens prédéterminé (par exemple les transitions montantes) à partir des valeurs des compteurs temporels des deuxième et troisième blocs de l'une des chaînes (par exemple à partir des valeurs des compteurs temporels CPT2A et CPT3A des deuxième et troisième blocs BLC2A et BLC3A de la chaîne CHA) et des valeurs des écarts temporels ou phases respectivement stockées dans les cellules des deuxième et troisième blocs de cette chaîne. Plus précisément, dans le cas présent, le déphasage entre les transitions TRA et TRB sera obtenu à partir des valeurs des compteurs temporels CPT2A et CPT3A et des valeurs PHA1 et PHB 1 stockées dans les blocs BLC2A et BLC3A.

De même, les moyens de traitement peuvent déterminer l'intervalle temporel entre deux transitions sélectionnées successives de l'autre sens (les transitions descendantes, par exemple) à partir des valeurs des compteurs temporels des deuxième et troisième blocs de l'autre chaîne et des valeurs des écarts temporels respectivement stockées dans les cellules des deuxième et troisième blocs de cette autre chaîne.

Ainsi, dans le cas présent, le déphasage déterminé à partir des transitions descendantes (par exemple les transitions TRA2 et TRB2) sera obtenu à partir des valeurs des compteurs temporels CPT2B et CPT3B et des valeurs des phases stockées dans les champs CH21B et CH3 1 B.

Il est intéressant de noter ici que les moyens de traitement peuvent effectuer par ailleurs un contrôle très simple du déphasage calculé en comparant les valeurs de déphasage respectivement obtenues à partir des deux chaînes CHA et CHB.

## Revendications

1. Dispositif électronique de calcul de l'intervalle temporel entre deux transitions successives sélectionnées d'un signal incident échantillonné par rapport à un seuil, **caractérisé par le fait qu'**il comprend des moyens de détection et de sélection (PMC) aptes à détecter et à sélectionner des transitions du signal incident (HFS), des moyens de calcul (PMC) aptes à calculer l'écart temporel (PH) entre chaque transition sélectionnée et un front du signal d'horloge d'échantillonnage (CKE), au moins une chaîne (CH) d'au moins trois blocs (BLC1-BLC3) comportant chacun une cellule de mémorisation (CH10, CH11) et un compteur temporel (CPT1) cadencé par le signal d'horloge d'échantillonnage, des moyens de contrôle (MCT) aptes en réponse à chaque transition courante sélectionnée à déclencher un traitement d'activation de la chaîne comportant une initialisation du compteur (CPT1) du premier bloc (BLC1) de la chaîne, un stockage dans la cellule du premier bloc de la valeur de l'écart temporel (PH) correspondant à la transition courante sélectionnée, puis un transfert du contenu d'un bloc de la chaîne dans le bloc suivant, et des moyens de traitement (MT) aptes à déterminer l'intervalle (PHL) temporel entre deux transitions sélectionnées successives à partir des valeurs des compteurs temporels (CPT2, CPT3) des deuxième et troisième blocs (BLC2, BLC3) et des valeurs des écarts temporels (PH) respectivement stockés dans les cellules des deuxième et troisième blocs.

2. Dispositif selon la revendication 1, **caractérisé par le fait que** le signal incident comporte deux signaux élémentaires (HFSA, HFSB), **par le fait que** les moyens de détection et de sélection comportent deux moyens élémentaires de détection et de sélection (PMCA, PMCB) recevant respectivement les deux signaux élémentaires et aptes respectivement à détecter et à déterminer le sens des transitions de chaque signal élémentaire, **par le fait que** les moyens de calcul comportent deux moyens de calcul élémentaires (PMCA, PMCB) aptes respectivement à calculer l'écart temporel entre chaque transition sélectionnée des deux signaux élémentaires et un front du signal d'horloge d'échantillonnage, deux chaînes (CHA, CHB) d'au moins trois blocs respectivement dédiées à des transitions de sens opposé, un moyen de multiplexage (MX) connecté entre les moyens de contrôle (MCT), les moyens élémentaires de détection et de sélection (PMCA, PMCB) et les deux chaînes de blocs (CHA, CHB), et commandé par un signal logique (SGNA, SGNB) représentatif du signe de chaque transition détectée, **par le fait que** les moyens de contrôle activent sélectivement l'une des deux chaînes de blocs en fonction du sens de chaque transition détectée, et **par le fait que** les moyens de traitement (MT) sont aptes à déterminer l'intervalle temporel entre deux transitions sélectionnées successives d'un sens prédéterminé à partir des valeurs des compteurs temporels des deuxième et troisième blocs (BLC2A, BLC3A) de l'une des chaînes et des valeurs des écarts temporels respectivement stockés dans les cellules des deuxième et troisième blocs de cette chaîne, et à déterminer l'intervalle temporel entre deux transitions sélectionnées successives de l'autre sens prédéterminé à partir des valeurs des compteurs temporels des deuxième et troisième blocs (BLC2B, BLC3B) de l'autre chaîne et des valeurs des écarts temporels respectivement stockés dans les cellules des deuxième et troisième blocs de cette autre chaîne.

3. Lecteur de disque numérique, en particulier de disque DVD, **caractérisé par le fait qu'**il incorpore un dispositif tel que défini dans l'une des revendications 1 ou 2.

## Patentansprüche

1. Elektronische Vorrichtung zur Berechnung des Zeitschlitzes zwischen zwei ausgewählten aufeinanderfolgenden Übergängen eines abgetasteten Eingangs- oder Fehlersignals über eine Schwelle, **dadurch gekennzeichnet, daß** sie aufweist:
Detektions- und Auswahleinrichtungen (PMC), die Übergänge des Eingangsssignals (HFS) erfassen und auswählen können,
Berechnungseinrichtungen (PMS), die einen Zeitabstand (PH) zwischen jedem ausgewählten Übergang und einer Flanke eines Abtasttaktsignals (CKE) berechnen können,
mindestens eine Kette (CH) aus mindestens drei Blöcken (BLC1-BLC3) mit jeweils einer Speicherzelle (CH10,CH11) und einem von dem Abtasttaktsignal getakteten Zeitzähler (CPT1)
Steuereinrichtungen (MCT), die als Antwort auf jeden aktuellen ausgewählten Übergang eine Aktivierungsverarbeitung der Kette auslösen können, die eine Initialisierung des Zählers (CPT1) des ersten Blocks (BLC1) der Kette, eine Speicherung des Werts des Zeitabstands (PH), der einem aktuellen ausgewählten Übergang entspricht, in der Zelle des ersten Blocks, dann eine Übertragung des Inhalts eines Blocks der Kette in den folgenden Block umfaßt; und
Verarbeitungseinrichtungen (MT), die aus den Werten der Zeitzähler (CPT2,CPT3) des zweiten und dritten Blocks (BLC2,BLC3) und den Werten der Zeitabstände (PH), die jeweils in den Zellen des zweiten bzw. dritten Blocks gespeichert sind, den Zeitschlitz (PHL) zwischen zwei ausgewählten aufeinanderfolgenden Übergängen bestimmen können.

2. Vorrichtung nach Anspruch 1, **dadurch gekennzeichnet, daß**
das Eingangssignal zwei elementare Signale (HFSA,HFSB) aufweist,
die Detektions- und Auswahleinrichtungen zwei elementare Detektions- und Auswahleinrichtungen (PMCA,PMCB) aufweisen, die jeweils die zwei elementaren Signale empfangen und jeweils die Richtung der Übergänge jedes elementaren Signals erfassen und bestimmen können,
die Berechnungseinrichtungen zwei elementare Berechnungseinrichtungen (PMCA,PMCB) aufweisen, die jeweils den Zeitabstand zwischen jedem ausgewählten Übergang der zwei elementaren Signale und einer Flanke des Abtasttaktsignals berechnen können,
zwei Ketten (CHA,CHB) aus mindestens drei Blöcken, die jeweils entgegengesetzt gerichteten Übergängen zugeordnet sind,
eine Multiplexeinrichtung (MX), die zwischen den Steuereinrichtungen (MCT), den elementaren Detektions- und Auswahleinrichtungen (PMCA,PMCB) und den zwei Blockketten (CHA,CHB) angeordnet ist und von einem logischen Signal (SGNA,SGNB) gesteuert wird, das das Vorzeichen jedes erfaßten Übergangs repräsentiert,
abhängig von der Richtung jedes erfaßten Übergangs die Steuereinrichtungen selektiv eine der zwei Blockketten aktivieren und
die Verarbeitungseinrichtungen (MT) aus den Werten der Zeitzähler des zweiten und dritten Blocks (BLC2A,BLC3A) einer der Ketten und den Werten der Zeitabstände, die jeweils in den Zellen des zweiten und dritten Blocks dieser Kette gespeichert sind, den Zeitschlitz zwischen zwei ausgewählten aufeinanderfolgenden Übergängen einer vorgegebenen Richtung bestimmen können und aus den Werten der Zeitzähler des zweiten und dritten Blocks (BLC2B,BLC3B) der anderen Kette und den Werten der Zeitabstände, die jeweils in den Zellen des zweiten und dritten Blocks dieser anderen Kette gespeichert sind, den Zeitschlitz zwischen zwei ausgewählten aufeinanderfolgenden Übergängen der anderen vorgegebenen Richtung bestimmen können.

3. Leser für digitale Platten, insbesondere DVD-Platten, **dadurch gekennzeichnet, daß** er eine Vorrichtung enthält, wie sie in einem der Ansprüche 1 oder 2 definiert ist.

## Claims

1. Electronic device for calculating the time interval between two selected successive transitions of a sampled incident signal with respect to a threshold, **characterized in that** it comprises detection and selection means (PMC) able to detect and to select transitions of the incident signal (HFS), calculating means (PMC) able to calculate the time gap (PH) between each selected transition and an edge of the sampling clock signal (CKE), at least one assemblage (CH) of at least three blocks (BLC1-BLC3) each comprising a storage cell (CH10, CH11) and a temporal counter (CPT1) regulated by the sampling clock signal, checking means (MCT) able in response to each selected current transition to trigger an activation processing of the assemblage comprising an initialization of the counter (CPT1) of the first block (BLC1) of the assemblage, a storage in the cell of the first block of the value of the time gap (PH) corresponding to the selected current transition, then a transfer of the content of a block of the assemblage into the next block, and processing means (MT) able to determine the time interval (PHL) between two successive selected transitions on the basis of the values of the temporal counters (CPT2, CPT3) of the second and third blocks (BLC2, BLC3) and of the values of the time gaps (PH) respectively stored in the cells of the second and third blocks.

2. Device according to Claim 1, **characterized in that** the incident signal comprises two elementary signals (HFSA, HFSB), **in that** the detection and selection means comprise two elementary detection and selection means (PMCA, PMCB) respectively receiving the two elementary signals and respectively able to detect and to determine the direction of the transitions of each elementary signal, **in that** the calculating means comprise two elementary calculating means (PMCA, PMCB) respectively able to calculate the time gap between each selected transition of the two elementary signals and an edge of the sampling clock signal, two assemblages (CHA, CHB) of at least three blocks respectively dedicated to transitions of opposite direction, a multiplexing means (MX) connected between the checking means (MCT), the elementary detection and selection means (PMCA, PMCB) and the two assemblages of blocks (CHA, CHB), and controlled by a logic signal (SGNA, SGNB) representative of the sign of each transition detected, **in that** the checking means selectively activate one of the two assemblages of blocks as a function of the direction of each transition detected, and **in that** the processing means (MT) are able to determine the time interval between two successive selected transitions of a predetermined direction on the basis of the values of the temporal counters of the second and third blocks (BLC2A, BLC3A) of one of the assemblages and of the values of the time gaps respectively stored in the cells of the second and third blocks of this assemblage, and to determine the time interval between two successive selected transitions of the other predetermined direction on the basis of the values of the temporal counters of the second and third blocks (BLC2B, BLC3B) of the other assemblage and of the values of the time gaps respectively stored in the cells of the second and third blocks of this other assemblage.

3. Digital disc reader, in particular DVD disc reader, **characterized in that** it incorporates a device as defined in either of Claims 1 and 2.
